Europäisches Patentamt

European Patent Office

Office européen des brevets

(11) Numéro de publication: **0 089 867**

**A1**

(12) # DEMANDE DE BREVET EUROPEEN

(21) Numéro de dépôt: 83400477.2

(22) Date de dépôt: 08.03.83

(51) Int. Cl.³: **F 16 L 37/00**
**F 16 L 41/08**

(30) Priorité: 24.03.82 FR 8204968

(43) Date de publication de la demande:
28.09.83 Bulletin 83/39

(84) Etats contractants désignés:
BE DE GB IT NL

(71) Demandeur: SYNDICAT NATIONAL DES ENTREPRISES
DE DRAINAGE
ZA de Courtaboeuf Immeuble ATLAS Avenue de la
Baltique
F-91940 Les Ulis(FR)

(71) Demandeur: LES PLASTIQUES DE FRANCE Société
Anonyme
7 et 9, rue Gustave-Eiffel
F-13010 Marseille(FR)

(72) Inventeur: Fournier, Christian
50, rue du Gué de Ville
F-77550 Moissy Cramayel(FR)

(72) Inventeur: Scialom, Richard
8A, rue Bienvenue
F-13008 Marseille(FR)

(74) Mandataire: Tony-Durand, Serge
Cabinet Tony-Durand 22, Boulevard Voltaire
F-75011 Paris(FR)

(54) **Raccord de branchement latéral d'un tuyau tel qu'un drain ou un collecteur sur un collecteur.**

(57) Raccord de branchement d'un drain sur un collecteur pour les réseaux de drainage, comprenant une pièce de raccordement (1) du tuyau sur le collecteur (4) et un clip (3) adapté pour s'emboîter sur le collecteur et pour recevoir la pièce (1).

Le clip (3) est incliné latéralement sur le collecteur (4) et la pièce (1) comporte un embout coudé tronqué (2) de raccordement, agencé de façon que les plans des sections des deux extrémités de la pièce (1) forment un angle dièdre inférieur à 90°.

L'invention permet de faire varier la chute altimétrique des filets d'eau dans le collecteur par positionnement angulaire convenable du clip (3) sur le collecteur et de la pièce (1) sur le clip.

FIG_2

EP 0 089 867 A1

"Raccord de branchement latéral d'un tuyau tel qu'un drain ou un collecteur sur un collecteur"

La présente invention a pour objet un raccord de branchement d'un tuyau tel qu'un drain ou un collecteur sur un autre collecteur.

La demande de brevet français N° 79 11979 (numéro de publication 2 456 280) décrit un raccord de branchement d'un drain sur un collecteur, comprenant une pipe coudée et un clip adapté pour s'emboîter sur le collecteur et pour recevoir la pipe, cette pipe étant percée d'une ouverture devant être positionnée en regard d'une ouverture correspondante du collecteur.

La génératrice inférieure de la pipe vient tangenter la génératrice supérieure du collecteur, de telle sorte que l'intervalle en hauteur entre la partie inférieure de la pipe et la partie supérieure du collecteur est presque nul.

Ce type de raccord présente les avantages mentionnés au brevet précité. Toutefois, on constate que cet agencement ne peut donner satisfaction dans le cas particulier où la chute altimétrique disponible entre les fils d'eau du tuyau et du collecteur est trop faible pour que le raccordement du tuyau sur le collecteur puisse se faire par la partie supérieure de ce dernier. Dans un tel cas, on ne peut donc obtenir un raccord convenable sur le dessus du collecteur. L'invention a pour but de résoudre ce problème en réalisant un raccord susceptible d'être mis en oeuvre de façon satisfaisante dans le cas considéré, c'est-à-dire avec une chute altimétrique inférieure au diamètre du collecteur tout en restant supérieure à la différence des rayons des deux tuyaux.

Le raccord visé par l'invention comprend une pièce de raccordement du tuyau sur le collecteur, et un clip adapté

.pour s'emboîter sur le collecteur et pour recevoir la pièce de raccordement .

Suivant l'invention, le clip est incliné latéralement sur le collecteur et la pièce de raccordement comporte un embout tronqué de façon que les plans des sections des deux extrémités de ladite pièce forment un angle dièdre inférieur à 90 degrés, de sorte que l'on peut faire varier l'angle d'incidence du tuyau sur le collecteur en fonction de la position angulaire du clip et de l'orientation angulaire de la pièce de raccordement sur le clip .

Ainsi, le raccordement peut être réalisé avec une chute altimétrique réduite entre les fils d'eau des deux tuyaux, en augmentant d'autant l'épaisseur de recouvrement du tuyau incident .

Ce résultat est obtenu par la réduction de l'angle dièdre formé par les plans des sections des deux extrémités de la pièce de raccordement/à une valeur inférieure à 90 degrés.
                    latérale
Dans ces conditions, la valeur de la chute altimétrique entre les fils d eau des tuyaux à raccorder peut varier en fonction de l'inclinaison donnée au clip au moment de sa mise en place sur le collecteur .

D'autres particularités et avantages de l'invention apparaitront au cours de la description qui va suivre, faite en référence aux dessins annexés sur lesquels on a représenté deux formes de réalisation non limitatives de l'invention.

La figure 1 est une vue en perspective éclatée d'une première forme de réalisation du raccord de branchement selon l'invention .

La figure 2 est une vue mi-coupe mi-élévation latérale représentant le raccord avec le clip mis en place sur le collecteur et la pièce de raccordement introduite dans le clip .

La figure 3 est une vue mi-élévation mi-coupe du raccord et du collecteur, le clip étant en position haute sur le

.collecteur .

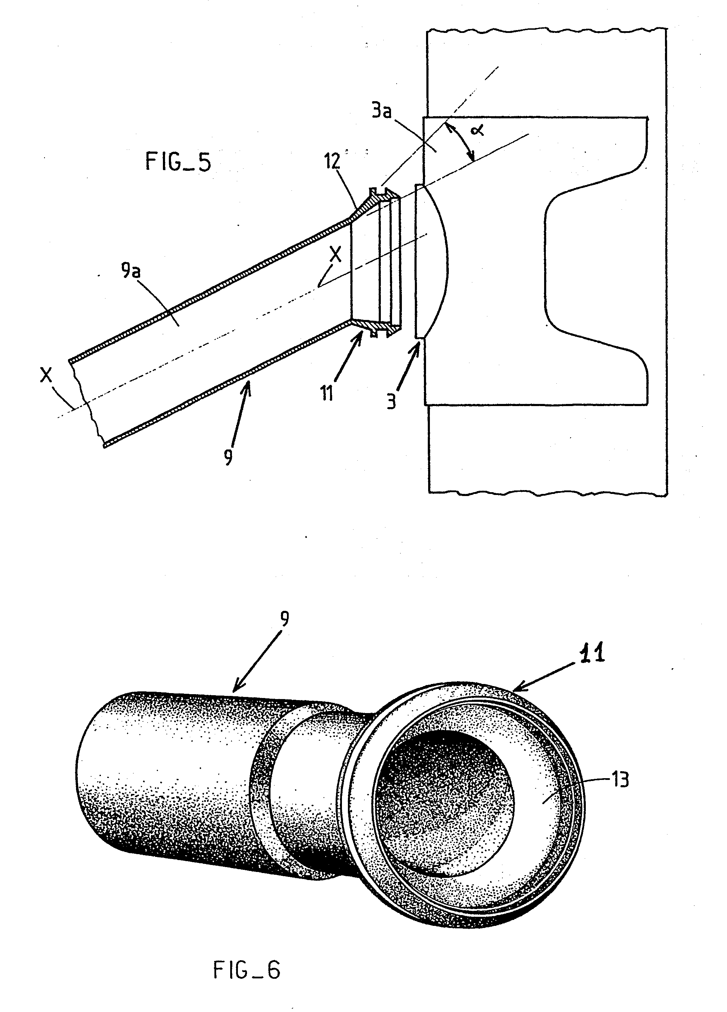

La figure 4 est une vue analogue à la figure 5 montrant le clip et la pièce de raccordement en position basse sur le collecteur .

La figure 5 est une vue en coupe horizontale axiale d'une seconde forme de réalisation du raccord de branchement selon l'invention .

La figure 6 est une vue en perspective 3/4 avant du raccord de la figure 5 montrant l'intérieur de l'embout de celui-ci .

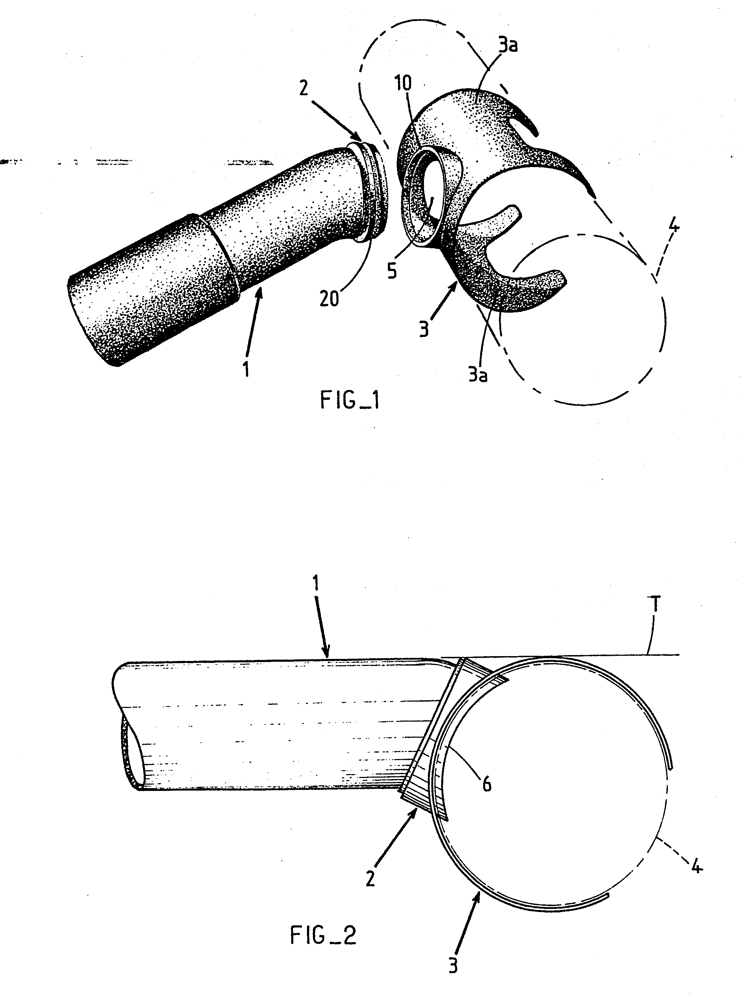

Le raccord représenté aux figures 1 à 4 est destiné à équiper des réseaux de tuyaux de drainage, notamment pour le drainage agricole .

Ce raccord comprend une pièce de raccordement 1 du tuyau ( non représenté , par exemple un drain) sur un collecteur 4, ainsi qu'un clip 3 adapté pour s'emboîter sur le collecteur 4 et pour recevoir la pièce de raccordement 1.

Le clip 3, du genre de celui décrit dans le brevet français précité a une section circulaire et comporte deux ailes incurvées 3a pouvant enserrer élastiquement le collecteur 4.

Enfin le clip 3 est percé d'une ouverture 5 pourvue d'un collet extérieur adapté pour recevoir l'extrémité de la pièce 1,et d'un collet intérieur 6 , le collecteur 4 étant percé d'une ouverture de même diamètre que celui de l'ouverture 5.

Suivant l'invention, le clip 3 est incliné latéralement sur le collecteur 4 et la pièce de raccordement 1 comporte un embout coudé tronqué 2 adapté pour venir s'encliqueter dans le collet extérieur 10 du clip 3.

A cette fin, le collet 10 est pourvu intérieurement de griffes d'encliquetage ( non représentées pour ne pas surcharger le dessin), similaires aux griffes d'encliquetage décrites dans le brevet précité, et qui peuvent venir s'introduire dans une rainure annulaire correspondante 20 de l'embout tronqué 2 .

Ce dernier est tronqué immédiatement après le début du coude comme on le voit en particulier à la figure 2, de telle sorte que les plans des sections des deux extrémités de la pièce 1 forment un angle dièdre inférieur à 90 degrés . Corrélativement, l'embout 2 est réalisé de telle sorte que par rotation de la pièce de raccordement latérale 1 sur le clip 3 , on obtienne une variation de la pente d'arrivée .

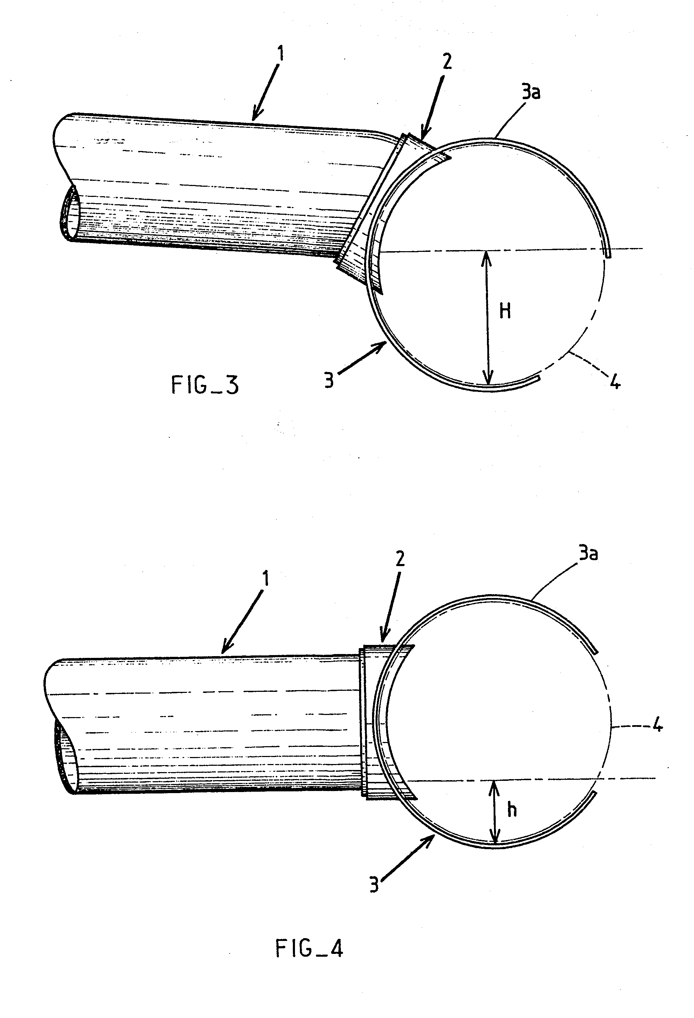

Par ailleurs, comme illustré aux figures 3 et 4, on peut faire varier la position angulaire du clip 3 sur le collecteur 4, entre une position haute ( figure 3 ) et une position basse ( figure 4 ) .Pour chaque position angulaire possible du clip 3, c'est-à-dire pour les différentes valeurs disponibles de la chute altimétrique , on peut orienter la pièce 1 angulairement de façon à lui faire prendre une pente compatible avec un écoulement correct .

Par exemple, sur la Figure 3, la position angulaire du clip 3 s'adapte à une chute altimétrique H égale à la différence des diamètres des tuyaux 1 et 4.

Par contre, sur la Figure 4 la position angulaire du clip 3 ne s'adapte qu'à une chute h, égale à la différence des rayons des tuyaux 1 et 4, ces deux valeurs de la chute altimétrique étant les valeurs extrêmes .

La réduction de la chute altimétrique entre les fils d'eau des deux tuyaux, ( drain et collecteur 4 ) augmente d'autant l'épaisseur de recouvrement du tuyau incident .

Dans une seconde forme de réalisation du raccord, illustrée aux figures 7 et 8, le drain ( non représenté ) a une section inférieure à celle des ouvertures du clip 3 et du collecteur .L'embout 11 de la pièce 9 de raccordement latéral est évasé et présente une plage annulaire 12 inclinée sur l'axe XX de la pièce 9 d'un angle $\alpha$ .

De ce fait, la section de l'ouverture de sortie de l'embout tronqué 11 est sensiblement supérieure à la section de la partie antérieure cylindrique 9 a de la pièce 9 . A titre indicatif non limitatif, l'angle $\alpha$ peut avoir une valeur de l'ordre de 20 à 30 degrés environ en fonction de la différence de ces sections .

Ainsi l'embout tronqué 11 présente une plage intérieure inclinée 13 sur laquelle s'écoulent les filets d'eau incidents avant d'entrer dans le collecteur .

Cette plage inclinée 13 correspond à un angle de coudage suffisamment faible pour ne créer aucune gêne dans l'écoulement des filets d'eau dans le cas d'une arrivée en biais. Ce résultat est dû à l'utilisation optimale de l'évasement obtenu par l'augmentation des diamètres de passage entre le tuyau incident et l'ouverture du clip 3 .

De ce fait, l'utilisation du raccord ainsi réalisé à mi-section du collecteur, c'est-à-dire dans la position la plus basse illustrée à la Figure 4, qui nécessite une orientation de la pièce 9 dans le sens d'écoulement du collecteur, assure aux filets liquides incidents une direction plus proche de celle des filets liquides du collecteur, que dans le cas d'une arrivée perpendiculaire à l'axe du collecteur .

L'invention n'est pas limitée aux modes de réalisations décrits ci-dessus et peut comporter des variantes d'exécution . Ainsi les angles de coudage des embouts tronqués 2 et 11 peuvent varier dans les limites assez étendues . D'autre part, il est possible de réaliser un tel raccord pour exécuter le branchement d'un collecteur sur un autre collecteur, le premier collecteur constituant alors le tuyau incident .

## REVENDICATIONS

1.- Raccord de branchement d'un tuyau tel qu'un drain ou un collecteur sur un collecteur, comprenant une pièce de raccordement ( 1,9 ) du tuyau sur le collecteur ( 4) et un clip (3) adapté pour s'emboiter sur le collecteur (4) et pour recevoir la pièce de raccordement (1,9) ce clip étant percé d'une ouverture (5) destinée à être positionnée en regard d'une ouverture correspondante du collecteur (4), caractérisé en ce que le clip (3) est incliné latéralement sur le collecteur (4) et la pièce de ra-ccordement ( 1,9 ) comporte un embout coudé tronqué ( 2,11) de façon que les plans des sections des deux extrémités de ladite pièce (1,9 ) forment un angle dièdre inférieur à 90 degrés, de sorte que l'on peut faire varier l'angle d'incidence du tuyau sur le collecteur (4) en fonction de la position angulaire du clip (3) et de l'orientation angulaire de la pièce de raccordement (1,9 ) sur le clip (3).

2.- Raccord selon la revendication 1, caractérisé en ce que, le tuyau ayant une section inférieure à celle des ouvertures du clip (3) et du collecteur (4), l'embout (11) de la pièce de raccordement (9) est évasé et présente une plage annulaire (12) inclinée sur l'axe (X-X) de la pièce de raccordement (9), déterminant une section d'entrée dans le collecteur supérieure à la section du tuyau .

3.- Raccord selon la revendication 2, caractérisé en ce que la plage annulaire (12) est inclinée d'environ 20 à 30 ° sur l'axe de la pièce de raccordement (9).

FIG_1

FIG_2

1

2

3a

H

3

4

FIG_3

1

2

3a

3

4

h

FIG_4

FIG_5

FIG_6

Office européen
des brevets

**RAPPORT DE RECHERCHE EUROPEENNE**

**0089867**
Numéro de la demande

EP  83  40  0477

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A- 646 131 (LANCERY) <br> * Page 1, lignes 11-18; figures 1-4 * | 1 | F 16 L 37/00 <br> F 16 L 41/08 |
| A | US-A-3 011 755 (BABSON) <br> * Figure 4 * | 1 | |
| A | US-A-3 272 471 (McCULLAH) <br> * Figures 1-5 * | 1 | |
| A | DE-A-1 811 610 (DÜRR) <br> * Figures 1-3 * | 1 | |

DOMAINES TECHNIQUES RECHERCHES (Int. Cl. ³)

F 16 L

Le présent rapport de recherche a été établi pour toutes les revendications

| Lieu de la recherche <br> LA HAYE | Date d'achèvement de la recherche <br> 21-06-1983 | Examinateur <br> ANGIUS P. |
|---|---|---|